# EUROPÄISCHE PATENTANMELDUNG

(11) **EP 0 907 209 A1**
(43) Veröffentlichungstag der Anmeldung: **07.04.1999**
(21) Anmeldenummer: 97810734.0
(22) Anmeldetag: 03.10.1997
(51) Int. Cl.: H01L 31/048

(54) **Dachziegel**

(71) Anmelder: Kämpfer & Co., 3476 Oschwand (CH)
(72) Erfinder: Kämpfer, Thomas, 3476 Oschwand (CH)
(74) Vertreter: AMMANN PATENTANWAELTE AG BERN

(57) **Zusammenfassung**

Ein Dachziegel (2) mit darauf angeordnetem Solarelement (3) stellt ein Dachziegelelement (1) dar, das zusammen mit normalen oder gleichartigen Dachziegelelementen (1, 11, 15) auf übliche Art zum Decken eines Ziegeldaches verwendet werden kann. Insbesondere wird durch dieses Dachziegelelement (1) das übliche Aussehen eines Ziegeldaches weit weniger beeinflusst als durch die gängigen, grossflächigen Solardachelemente. Die Solarmodule (3) werden bevorzugt mittels eines elastischen Materials, z. B. eines Silikonklebers (18) auf den Ziegel (2) befestigt, um Unterschiede in den thermischen Ausdehnungskoeffizienten ausgleichen zu können. Für die Begehbarkeit sind die Solarelemente mit einer entsprechend stabilen, transparenten Abdeckung (13), insbesondere aus Sicherheitsglas mit 3 bis 4 mm Dicke ausgestattet. Durch eine besondere Formgebung auf der Unterseite, insbesondere seitlich des Solarmoduls (3) auf dem jeweils unteren Ziegelelement (1) aufstehende Füsse (17), kann die übliche überlappende Anordnung erzielt werden, ohne das Solarmodul (3) mit dem Gewicht des oberen Ziegels (15) zu belasten.

## Beschreibung

Vorliegende Erfindung bezieht sich auf ein Dachziegelelement. Im weiteren bezieht sich die Erfindung auch auf Dachziegel gemäss Anspruch 7 und deren Verwendung.

Solarmodule, die Licht in Strom umwandeln, werden oft auch in Dächer integriert. Bei den gängigen Ausführungen liegt dabei ein Modul vor, das eine Fläche entsprechend mehreren Ziegein des Daches geschlossen abdeckt. Diese Module müssen wegen des Erfordernisses der Begehbarkeit eines Daches, insbesondere eines Giebeldaches, stabil ausgeführt sein. Oft verschlechtern die dafür nötigen, stabilen Unterlagen jedoch die Belüftung und damit Kühlung der Solarmodule. Daneben sind diese Solarmodule auch wegen der speziellen und aufwendigen Bauweise relativ teuer. Auch in ästhetischer Hinsicht können die bekannten Solarmodule bei Verwendung in mit Dachziegeln gedeckten Dächern nicht überzeugen, da sie die Struktur des Ziegeldaches unübersehbar stören. Ausserdem müssen in den Uebergangsbereichen zum Ziegeldach besondere Massnahmen getroffen werden, um die Dichtigkeit des Daches zu gewährleisten. Das Decken eines solchen Daches verlangt damit eine besondere Arbeitsweise.

Eine Aufgabe der vorliegenden Erfindung ist es, ein Dachziegelelement anzugeben, das im wesentlichen wie ein normaler Dachziegel eingesetzt werden kann. Bevorzugt werden weitere, oben genannte Nachteile bekannter Ausführungen von Solarelementen zur Verwendung auf Hausdächern vermieden.

Ein solches Dachziegelelement ist im Anspruch 1 angegeben. Der unabhängige Anspruch 7 gibt einen Dachziegel in einer für das Dachziegelelement besonders vorteilhaften Ausführungsform an.

Die Erfindung soll an einem Ausführungsbeispiel unter Bezugnahme auf Figuren erläutert werden.
- Figur 1: zeigt eine Draufsicht auf den erfindungsgemässen Solarziegel;
- Figur 2: zeigt ein Teillängsschnitt durch ein Dach mit dem Solarziegelelement im Prinzip gemäss Schnitt II-II in Figur 1 und
- Figur 3: zeigt dieselbe Situation, jedoch im Schnitt prinzipiell gemäss III-III in Figur 1.

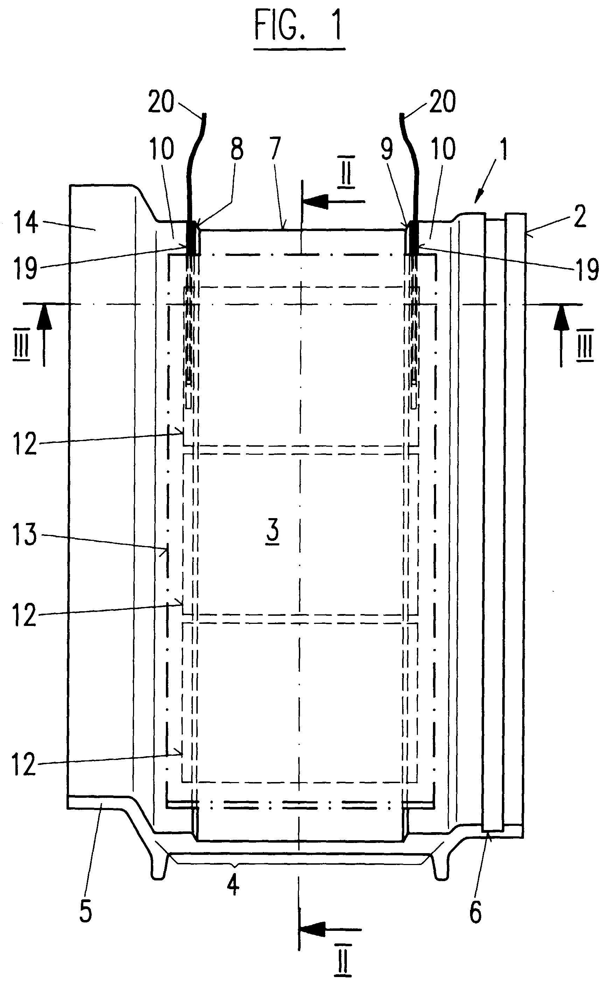

Der Solarziegel 1 gemäss Figur 1 besteht im wesentlichen aus einem modifizierten Flachfalzziegel 2, auf dem ein Solarmodul 3 angebracht ist. Flachfalzziegel sind hier von Vorteil, da sie bereits in der regulären Ausführung eine breite und ebene Fläche 4 aufweisen, die seitlich von Ober- 5 und Unterfalz 6 begrenzt sind. Der Ziegel 2 weist in Längsrichtung eine als Kanal 7 ausgebildete Vertiefung auf, die in der Breite einen wesentlichen Teil der Fläche 4 abdeckt. Die Ränder 8, 9 des Kanals 7 weisen zumindest im Kantenbereich hinreichend ebene Auflageflächen 10 für das Solarmodul 3 auf.

Das Solarmodul 3 besteht in bekannter Art aus einer Anzahl, hier drei, Solarelementen 12, die aneinander befestigt, elektrisch verbunden und mit einer Glasplatte 13 abgedeckt sind. Derartige Solarmodule mit einer Abdeckung aus Glas oder einer transparenten Platte aus anderem Material sind an sich bekannt. Vorliegend wird jedoch im Hinblick auf die Trittfestigkeit eine unüblich dicke Glasplatte verwendet, insbesondere eine aus Sicherheitsglas mit einer Dicke von 3 bis 4 mm. Vorteilhaft wirkt sich dabei die gegenüber dem bekannten Solarmodulen relativ geringe Breite des Solarmoduls 3 und des Kanals 7 aus, da vergleichsweise nur eine kleine Strecke des Moduls, nämlich die Breite des Kanals 7, keine rückwärtige Stütze hat.

Aus diesem Grund, aber auch wegen der Ästhetik, ist bevorzugt die Oberfläche des Solarmoduls bündig mit der höchsten Erhebung der Falze 5, 6 oder weiter bevorzugt niedriger als diese.

Das Solarmodul 11 ist mittels eines elastischen Klebers 18, zum Beispiel in der Art einer dauerelastischen Silikonmasse, auf dem Ziegel 2 befestigt. Da das Material des Ziegels 2 und dasjenige des Solarmoduls 3 in der Regel unterschiedliche thermische Ausdehnungskoeffizienten aufweisen, ist eine solche flexible in der Regel nötig, um die unterschiedliche Ausdehnung bei Erwärmen und Abkühlen des Daches aufzufangen.

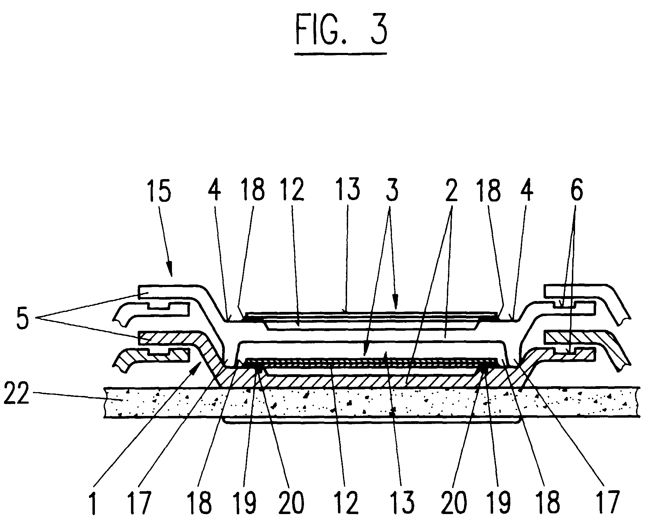

Die Glasplatte 13 ragt in Längsrichtung, insbesondere zum oberen Ende 14 des Ziegels 2, deutlich über die Anordnung der Solarelemente 12 hinaus. Im fertigen Dach gemäss Figur 3 liegt damit das obere Ende der Glasplatte unter dem nächst oberen Ziegel 15, wodurch das Solarmodul 3 gegenüber hinabfliessendem Regenwasser von oben geschützt ist. Die seitliche Abdichtung wird durch die Klebemasse 18 gewährleistet, eine Abdichtung an der unteren Kante ist in der Regel nicht notwendig, wenn die Glasplatte 13 genügend weit nach unten über die Anordnung der Solarelemente 12 vorsteht.

Das Solarmodul 3 ist insgesamt derart in Längsrichtung auf dem Ziegel 2 angeordnet, dass sich die Solarelemente 12 in dem freiliegenden Bereich 16 befinden, der von den überlappenden oberen Ziegel 14 nicht abgeschattet wird, so dass die Solarelemente 12 in möglichst voller Fläche dem Sonnenlicht ausgesetzt sind.

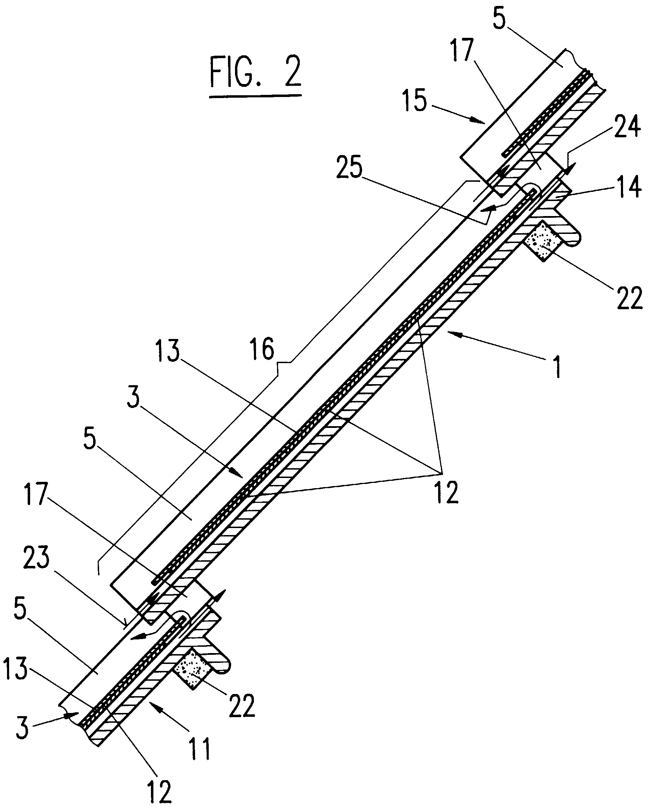

Die oberhalb eines Solarziegels 1 angeordneten oberen Ziegel 15 weisen an ihrem unteren Ende Füsse 17 auf, mit denen sie auf dem Ziegel 2 stehen, ohne dabei das Solarmodul 3 zu belasten, siehe Figur 2. Zwischen dem Solarmodul 3 und den Falzen 5 und 6 ist dazu jeweils ein Streifen der Mittelfläche 4 freigelassen.

Mit den beschriebenen Solarziegeln 1 lassen sich offensichtlich auf klassische Dachdecker-Art Ziegeldächer decken. Der ästhetische Ausdruck eines Ziegeldaches mit zum First aufsteigenden Linien wird dabei nicht unterbrochen, sondern bei Anordnung mehrerer Solarziegel noch durch die dann ebenfalls Linien bildenden Solarelemente verstärkt. Dabei ist zu beachten, dass der Ziegel 15, der sich oben an den obersten Solarziegel 1 anschliesst, wie oben beschrieben mit Füssen 17 ausgestattet ist. Die Solarziegel selbst sind im einfachsten Falle standardmässig mit derartigen Füssen 17 ausgestattet, um in beliebiger Anzahl untereinander angeordnet werden zu können.

Solarelemente weisen häufig den elektrischen Anschluss sehr nahe am Rand auf. Bei den beispielhaften Solarelementen, die sich auch auf die Auflagefläche 10 erstrecken, befinden sich daher die Anschlüsse oft im Bereich dieser Auflageflächen. Der Ziegel 2 weist daher noch, zumindest im oberen Teil, das heisst im Bereich des obersten Solarelementes 12, seitlich in den Auflageflächen 10 Nuten 19 auf, in denen die elektrischen Anschlussleitungen 20 verlegt werden können.

Figur 2 zeigt im Längsschnitt einen Ausschnitt aus einem Dach mit Solarziegel 1. Die Ziegel 1, 15 und 11 sind jeweils wie üblich an Dachlatten 22 eingehängt. Die Pfeile 23 bis 25 zeigen die beiden verschiedenen Luftströmungsmöglichkeiten: die Luft tritt jeweils am unteren oder vorderen Ende des Kanals 7 gemäss Pfeil 23 ein und strömt an der Rückseite des Solarmoduls 3 entlang, wodurch die Solarelemente gekühlt werden. Am oberen Ende des Kanals 7 bzw. der Glasplatte 13 kann die erwärmte Luft gemäss Pfeil 24 unter dem Dach weiter aufsteigen oder gemäss Pfeil 25 durch die Fuge zwischen dem Solarmodul 3 und dem oberen Ziegel 15 nach aussen abströmen. Durch zusätzliche nicht gezeichnete Massnahmen kann die eine oder andere Abluftströmung 24, 25 forciert werden. Denkbar sind hier z. B. Abdichtungen.

Die elektrische Verschaltung der Solarmodule erfolgt im wesentlich nach gängigen Prinzipien. Bevorzugt werden so viele Solarziegel eingesetzt, dass in einer Reihenschaltung eine Spannung erhältlich ist, die den Betrieb eines Ladereglers für die üblicherweise vorhandene Batterie mit gutem Wirkungsgrad erlaubt.

Aus der angegebenen Ausführungsform des Solarziegels kann der Fachmann eine Vielzahl Varianten ableiten, ohne den Bereich der Erfindung zu verlassen. Denkbar sind z. B. die folgenden Varianten:

Statt eines Kanals 7 können mehrere, parallele Kanäle vorgesehen werden, wodurch sich auch die freie, ungestützte Breite des Solarelements im Sinne einer höheren Belastbarkeit beim Begehen vermindert. Im Bereich des Kanals 7 können Luftlöcher vorgesehen sein, um zusätzliche Entlüftung zum Dachinnern zu gewährleisten. Die Solarelemente im Solarmodul können nahezu beliebig angeordnet sein. Die Solarmodule können insbesondere auch nur die Breite des Kanals 7 aufweisen, so dass im wesentlichen nur die Glasplatte 13 auf den Auflageflächen 10 aufliegt. In diesem Fall würde auch die vollständige Rückseite der Solarelemente vom Luftstrom gekühlt und die Anschlüsse könnten im Kanal 7 verlegt werden. Die Anzahl der Solarelemente im Modul kann je nach Platzverhältnissen schwanken.

Die Solarmodule könnte auch auf andere Art auf dem Ziegel befestigt sein, z. B. durch eine Klemmvorrichtung, soweit dadurch die Relativbewegung bei Temperaturänderung möglich bleibt. Die Masse 18 könnte dann alleine der Abdichtung dienen, ohne eine wesentliche Haltefunktion zu übernehmen.

## Patentansprüche

1. Dachziegelelement, dadurch gekennzeichnet, dass es im wesentlichen aus einem Ziegel (2) besteht, auf dessen Oberseite ein Solarmodul (12) zur Erzeugung von Energie, insbesondere elektrischem Strom, aus Sonnenlicht angeordnet ist.

2. Dachziegelelement gemäss Anspruch 1, dadurch gekennzeichnet, dass sich unter dem Solarmodul (3) mindestens ein Luftkanal (7) erstreckt, so dass die Solarelemente (12) des Solarmoduls (3) von den Luftkanal (7) durchströmender Luft (23-25) kühlbar sind.

3. Dachziegelelement gemäss Anspruch 2, dadurch gekennzeichnet, dass der Luftkanal (7) mindestens eine, bevorzugt genau eine, Vertiefung im Ziegel ist, die sich über im wesentlich die ganze Länge des Ziegels (2) erstreckt.

4. Dachziegelelement gemäss einem der Ansprüche 1 bis 3, dadurch gekennzeichnet, dass das Solarmodul (3) zumindest im Randbereich durch eine flexible Masse (18) mit der Oberfläche des Ziegels (2) verbunden ist, um das Solarmodul auf dem Ziegel (2) zu halten und/oder gegen diesen abzudichten.

5. Dachziegelelement gemäss einem der Ansprüche 1 bis 4 dadurch gekennzeichnet, dass das Solarelement mit einer Glasplatte, insbesondere einer Sicherheitsglasplatte (13) mit einer Dicke von 3 bis 4 mm, abgedeckt ist, so dass das Dachziegelelement begehbar ist.

6. Dachziegelelement gemäss einem der Ansprüche 1 bis 5, dadurch gekennzeichnet, dass sich auf dem Solarelement (12) eine transparente Abdeckplatte (13), insbesondere aus Glas, befindet, die sich in Längsrichtung des Ziegels (2) über die Solarelemente (12) des Solarmoduls (3) deutlich hinaus erstreckt, so dass bei Ueberlappung des oberen Endes (14) des Dachziegelelements (1) mit einem zweiten Ziegel (15) auch eine Ueberlappung des Solarmoduls (3) zum Schutz gegen Regenwasser erhältlich ist, ohne dass die Solarelemente (12) durch den zweiten Ziegel (15) abgedeckt werden.

7. Dachziegel (2), insbesondere zur Verwendung in einem Dachziegelelement gemäss einem der Ansprüche 1 bis 6, dadurch gekennzeichnet, dass er mindestens eine Furche (7) aufweist, die sich im wesentlichen über die ganze Länge erstreckt, mindestens die Hälfte der Breite des Dachziegels einnimmt und beidseitig von Schultern (8, 9) mit im wesentlichen ebenen Oberflächen (10) begrenzt wird, so dass ein Solarmodul (3) auf den Schultern aufliegend und die Furche(n) überspannend auf dem Ziegel (2) anbringbar und durch in den Furchen (7) strömende Luft rückwärtig kühlbar ist.

8. Dachziegel (2), insbesondere gemäss Anspruch 7 oder zur Verwendung in einem Dachziegelelement gemäss einem der Ansprüche 1 bis 6, dadurch gekennzeichnet, dass er nahe seinem einen Ende in Längsrichtung an der Unterseite eine Anordnung von mindestens zwei Füssen (17) aufweist, die eine Ausnehmung definieren, so dass der Ziegel (2) auf ein Dachziegelelement (1) gemäss einem der Ansprüche 1 bis 6 überlappend mit den Füssen aufstellbar ist, wobei sich das Solarmodul (3) des Dachziegelelements (1) in der durch die Füsse (17) vorgegebenen Ausnehmung erstreckt.

9. Dachziegel (2) gemäss Anspruch 8, dadurch gekennzeichnet, dass die durch die Füsse (17) gegebene Ausnehmung eine Höhe aufweist, die grösser ist als diejenige des Solarmoduls (3) eines Dachziegelelements, so dass bei Aufstellen des Ziegels (2) auf ein Dachziegelelement (1) mit darauf angeordnetem Solarmodul (3) zwischen Solarmodul (3) und Dachziegel (2) ein Spalt verbleibt, der das Durchströmen von Luft (23 - 25) gestattet.
